Europäisches Patentamt

(19) **European Patent Office**

**Office européen des brevets**

(11) Publication number: **0 047 062**
**A2**

(12) # EUROPEAN PATENT APPLICATION

(21) Application number: **81303463.4**

(51) Int. Cl.³: **G 03 B 15/00**

(22) Date of filing: **28.07.81**

(30) Priority: **30.08.80 JP 119019/80**

(43) Date of publication of application:
**10.03.82 Bulletin 82/10**

(84) Designated Contracting States:
**DE FR GB IT**

(71) Applicant: **Ogawa, Tadahiro**
**14-11, Kohinata 3-chome**
**Bunkyoku Tokyo(JP)**

(72) Inventor: **Ogawa, Tadahiro**
**14-11, Kohinata 3-chome**
**Bunkyoku Tokyo(JP)**

(74) Representative: **Baillie, Iain Cameron et al,**
**c/o Ladas & Parry Isartorplatz 5**
**D-8000 München 2(DE)**

(54) Apparatus for taking a consecutive photograph of the periphery of an article.

(57) This invention relates to an apparatus for taking a consecutive photograph of the periphery of an article consisting of a center disk on which an article is to be placed and a larger concentric disk on which a slit camera, light projector for illuminating the periphery of said article, reflector for reflecting the light from said illuminated surface into the slit camera and non-reflective background are placed wherein either of said disks can rotate against the other.

EP 0 047 062 A2

# APPARATUS FOR TAKING A CONSECUTIVE PHOTOGRAPH OF
## THE PERIPHERY OF AN ARTICLE

This invention relates to an apparatus for taking a consecutive photograph of the periphery of an article consisting of a center disk on which an article is to be placed and a larger concentric disk on which a slit camera, light projector for illuminating the periphery of the article, reflector for reflecting the light from the illuminated surface into the slit camera and non-reflecting background are placed wherein either of said disks can rotate against the other.

One can see the whole surfaces around the article at a glance by the photograph taken by this apparatus and can fully appreciate the picture painted or engravings displayed on the surfaces.

When the article is fragile such as porcelain or glass, the center disk on which such an article is to be placed should be held stationary while the concentric disk is rotating. Otherwise, if the center disk rotated with such a fragile article upon it, the risk of cracking or demolishing of the article by tumbling down during rotation would not be avoided. On the contrary, when the article is hard and sturdy such as metallic or wooden, it may be rotated by or with the center disk. ·

In the accompanying drawings, one embodiment of the invention is shown wherein the center disk is held stationary while the concentric disk rotates.

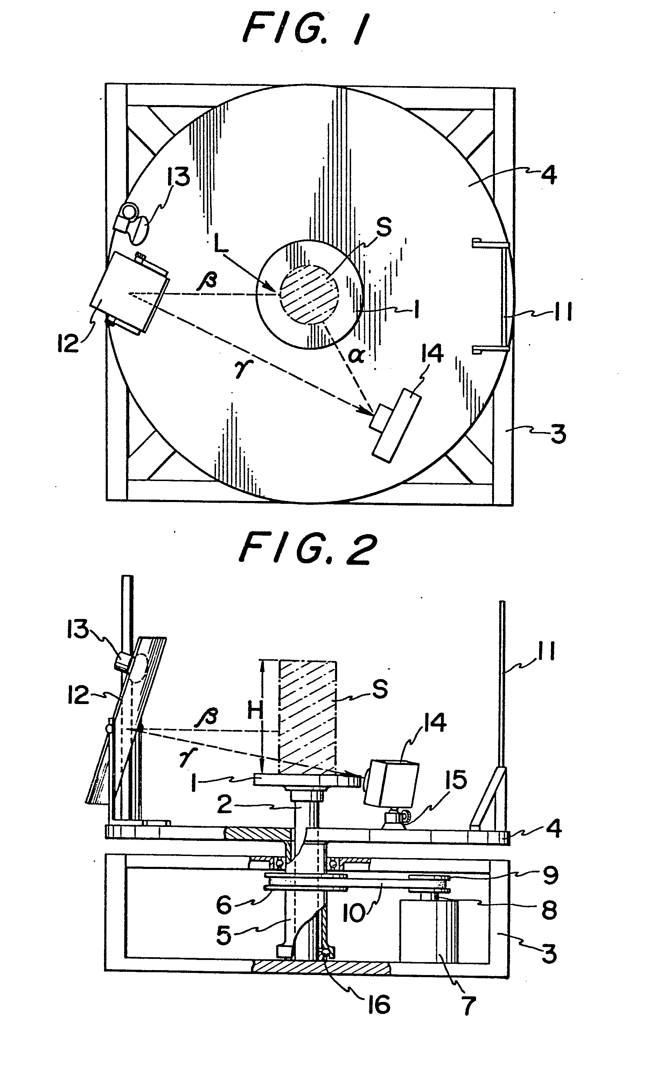

Figure 1 is a plan view; and

Figure 2 is a side view of the apparatus.

(1) is a center disk on which a fragile article (S) such as porcelain or glass is mounted. (4) is a larger concentric disk on which a slit camera (14), light projector (13) for illuminating the surface of said article, reflector (12) for reflecting the light (β) from the illuminated surface to the slit camera (14) as shown by (γ) and non-reflective background (11) are placed.

The concentric disk (4) is provided with a tubular supporting shaft (5) rotatively suspended on the base of the framework (3) by means of ball bearings (16). In said tubular shaft, the supporting shaft (2) of the center disk (1) is inserted and its rear end is fixed at the base of the framework (3).

In the slit camera (14), film is fed continuously behind a slit. The velocity and direction of the film are similar to those of the concentric disk (4).

The tubular shaft (5) is driven by an electric motor (7) by means of a belt (10) engaging with a pulley (6) attached to the shaft (5) and a pulley (9) attached to the motor shaft (8).

The slit camera (14) is mounted on a universal joint (15) whereby its angle of elevation can be adjusted in accordance with the height (H) of the article (S).

The photograph of the whole periphery of the article (S) can be taken by one complete rotation of the concentric disk (4) and one can appreciate the picture or engravings displayed on the whole surface of the article (S) at a glance.

As is obvious from the drawing, by means of a reflector (12), though the distance $(\alpha)$ from the slit camera (14) to the article (S) is short, the real photographing distance, viz., $(\alpha) + (\beta)$, is so long that the diameter of the concentric disk (4) as well as the size of the whole apparatus can be reduced.

Instead of a plane reflector (12), convex or concave mirror, or their combination may be employed as reflector for compensating the curvature of the surface.

When the article (S) be hard and sturdy such as metallic or wooden, it may be placed on the rotative center disk (1), while the concentric disk (4) is held stationary.

CLAIMS:

1. Apparatus for taking a consecutive photograph of the periphery
of an article consisting of a center disk on which said article is
to be placed and a larger concentric disk on which a slit camera,
light projector for illuminating the periphery of the article,
reflector for reflecting the light from said illuminated surface
to the slit camera and non-reflective background are placed wherein
either of said disks can rotate relative to the other.

# FIG. 1

# FIG. 2